# EUROPÄISCHE PATENTSCHRIFT

(11) **EP 3 774 514 B1**
(45) Veröffentlichungstag und Bekanntmachung des Hinweises auf die Patenterteilung: **29.05.2024**
(21) Anmeldenummer: 19742519.2
(22) Anmeldetag: 24.03.2019
(51) Int. Cl.: B62M 11/16, B62M 11/18

(54) **MEHRGANGGETRIEBE MIT ZWEI PLANETENGETRIEBEN**
MULTI-SPEED TRANSMISSION WITH TWO PLANETARY GEARS
TRANSMISSION MULTIVITESSES POURVUE DE DEUX BOÎTES DE VITESSES À TRAINS ÉPICYCLOÏDAUX

(30) Priorität: 28.03.2018 DE 102018010274; 17.09.2018 DE 102018007326
(43) Veröffentlichungstag der Anmeldung: 17.02.2021
(73) Patentinhaber: Donner, Wilfried, 53506 Rech (DE)
(72) Erfinder: Donner, Wilfried, 53506 Rech (DE)
(74) Vertreter: Ederer, Thomas Josef
(86) Internationale Anmeldenummer: PCT/DE2019/000079
(87) Internationale Veröffentlichungsnummer: WO 2019/192634

(56) Entgegenhaltungen:
- EP-A1- 0 915 800
- EP-A1- 2 028 096
- EP-A2- 0 531 608
- DE-A1-102014 101 726

## Beschreibung

Die Erfindung betrifft gemäß dem Oberbegriff des Hauptanspruchs ein Mehrganggetriebe, insbesondere für ein Zweirad, das auf einer zentralen Achse montiert ist, eine antriebsseitige Hohlwelle und eine abtriebsseitige Nabenhülse aufweist, zwischen denen zwei mindestens zweistufige Planetengetriebe eingesetzt sind, die jeweils mit Sonnenrädern und zugehörigen Stegen miteinander verbundene Planetenräder sowie jeweils mit einem Hohlrad entweder in einen Blockumlauf oder einen von mehreren Über- oder Untersetzungsmodi schaltbar sind.

Ein ähnliches Mehrganggetriebe ist aus der EP 0915 800 B1 bekannt. Dieses enthält eine an einem Fahrradrahmen drehfest montierbare Achse, einen drehbar auf der Achse gelagerten Antreiber, eine drehbar auf der Achse gelagerte Hülse, ein mit einem ersten und einem zweiten Planetengetriebe versehenes, in der Hülse angeordnetes und mit dem Antreiber und der Hülse gekoppeltes Schaltgetriebe zur Bereitstellung von mehreren Übersetzungsverhältnissen zwischen dem Antreiber und der Hülse, wobei die Planetengetriebe wenigstens zwei zur Achse koaxiale Sonnenräder, wenigstens einen Planetenträger mit entsprechend abgestuften, mit den zwei Sonnenrädern im Eingriff befindlichen Planetenrädern und wenigstens ein mit den Planetenrädern im Eingriff befindlichen Hohlrad sowie eine Schalteinrichtung zur Auswahl der Übersetzungsverhältnisse durch wahlweises Verbinden der Sonnenräder mit der Achse aufweisen, wozu die Schalteinrichtung Mittel zur wahlweisen Verbindung des Hohlrades oder des Planetenträgers des ersten und / oder zweiten Planetengetriebes mit einem Sonnenrad desselben Planetengetriebes aufweist. Dadurch wird bevorzugt ein 7x2 = 14 - Ganggetriebe gebildet, indem ein Siebenganggetriebe, aus einem Direktgang und zwei zweistufigen Schaltgetrieben bestehend, mit einem weiteren Getriebe, das einen Direktgang und eine schaltbare Planetenanordnung aufweist, hintereinander gekoppelt sind. Die Schaltung erfolgt mit 4 Schaltklinken, 3 Axialkupplungen und 6 Planetensätzen, die zu drei Zweifachstufenplaneten angeordnet sind.

Nachteilig bei dieser Anordnung ist das niedrige verkraftbare Eingangsdrehmoment, was eine bevorzugte Ketten - oder Riemengetriebeübersetzung ins Schnelle von bevorzugt 2,5 zur Folge hat. Die Sonnenräder werden mit Klinken achsfest gesetzt, was eine Innenverzahnung derselben erforderlich macht, die von den Klinken - aus Platzgründen nur eine pro Sonnenrad - asymmetrisch und nur an einem Innenzahn belastet wird. Ein weiterer Nachteil hierbei ist, dass keine Steckachse einsetzbar ist.

Ein weiteres Mehrganggetriebe ist aus der gattungsgemäßen EP2028 096 A1 bekannt, bei dem nur 5 Planetensätze, die von einem zweifach- und einem dreifach- Stufenplaneten gebildet werden, aber 12 Schaltkupplungen vorgesehen sind.

Nachteilig bei dieser Anordnung ist, dass sechs der Schaltkupplungen Klinken sind, die der Achsfestsetzung der 4 Sonnenräder dienen. Weitere Kupplungen, die axial wirken, haben etwa Hohlraddurchmesser. Zudem müssen die Hohlräder auf deren großen Durchmesser gelagert werden. Die Schalteinrichtung des Getriebes ist sehr komplex und aufwendig in der Fertigung. Zudem können die Stufenplaneten nicht mit Wälzlagern gelagert werden, da einige Planeten über geringe Zähnezahlen verfügen (14 bzw. 15 Zähne). Eine 12mm Steckachse ist ebenfalls nicht realisierbar. Das Eingangsgetriebe, bestehend aus zwei Sonnenrädern, zwei Hohlrädern und drei dreifach- Stufenplaneten stellt neben dem direkten Gang drei Übersetzungen ins Schnelle bereit. Der erste Gang dieses Getriebes ist der direkte Gang, der durch die Koppelung von Planetenträger und Hohlrad gebildet wird. Beim zweiten und dritten Gang bildet das Getriebe zwei Teilgetriebe, die aber für jeden der beiden Gänge verschieden sind. Der vierte Gang ist ein vom Planetenträger angetriebenes, einfaches Planetengetriebe mit zweifach- Stufenplanet. Aus der Gesamtkonstruktion ergibt sich eine hohe Zahl verschiedener komplexer Teile und eine deutlich über der Masse des aus der EP 0915 800 B1 bekannten Getriebes liegende Gesamtmasse.

Weiterhin sind aus der US 9279480 B2 Mehrgangnabengetriebe mit drei oder vier Planetensätzen bekannt, die durch neun Kupplungen in verschiedener Weise gekoppelt werden können.

Die Kupplungen werden durch eine Nockenwelle angesteuert, die radiale Schaltmittel betätigt.

Nachteilig sind hier die niedrigen verkraftbaren Eingangsdrehmoment und die Vielzahl unterschiedlicher, komplexer Fertigungsteile.

Beim Stand der Technik werden Getriebe dieser Art mit Klinken geschaltet, welche in Durchbrüchen einer Getriebeachse abgestützt, durch Nocken auf einer Schaltwelle gesteuert, aus- oder eingeklappt werden (vgl. EP 2028 096 A1; DE 10 2010 051.727 A1). Soll ein Zahnrad achsfest gesetzt werden, klappt die Klinke aus, und greift in eine Innenverzahnung des festzusetzenden Zahnrades ein. Einerseits hat die Innenverzahnung eine Kerbwirkung, und andererseits wird das Zahnrad punktuell von innen belastet. Die Wandung der Hohlachse muss, wegen der hohen Kräfte relativ dickwandig ausgeführt werden und damit einen verhältnismäßig großen Durchmesser aufweisen. Bei Klinken ist bekannt, dass diese sich nur schlecht unter Last einklappen lassen. Eine weitere Schaltungsart zeigt die US 9279480 B2, bei der radiale Nocken die Schaltmittel betätigen.

Allen diesen vorbekannten Naben ist gemein, dass das auf einer Hohlwelle montierte Antriebsritsel etwa die Hälfte - oder deutlich weniger - der Zähnezahlen aufweist als ein Tretkurbelabtriebsblatt üblicher Weise aufweist, weil die verkraftbaren Eingangskräfte relativ niedrig sind.

Die mittlerweile weit verbreiteten Zahnriemen als Kraftübertragungsmittel zum Hinterrad, erfordern wegen deren Steifigkeit deutlich größere Zähnezahlen am Hinterrad. Die seit einigen Jahren angebotenen E-Bikes ermöglichen erhöhte Durchschnittsgeschwindigkeiten, die in der Folge eine hohe Übersetzungsbandbreite erfordern. Mittlerweile wird die 5mm Schnellspannachse, mit der eine Nabe im Hinterbau oder in der Gabel verspannt wird, mehr und mehr von Steckachsen verdrängt. Im Hinterrad ist ein Durchmesser von 12mm üblich. Die Steckachse ist i. W. eine lange Schraube mit einem kurzen 12mm Gewinde. Die Steckachse wird von einer Seite durch eine geeignet ausgebildete Bohrung gesteckt, durch die hohle Nabenachse geführt, um dann in das Gewinde des gegenüberliegenden Ausfallendes geschraubt zu werden. Beim Festziehen wird die Verbindung vorgespannt.

Der Erfindung liegt die Aufgabe zu Grunde, das Mehrganggetriebe so auszubilden, dass eine hohe Übersetzungsbandbreite bei niedrigem Gewicht, hohem Wirkungsgrad, einfacher Herstellbarkeit, für Zahnriemen geeignete Übersetzung und unter Last, bei einfacher Steuerung, besonders gut schaltbar ist und mittels Steckachse in den Ausfallenden des Hinterbaus montiert werden kann.

Die Lösung ist im Kennzeichen des Hauptanspruches angegeben. Vorteilhafte Ausgestaltungen sind in den Unter- und Nebenansprüchen angegeben.

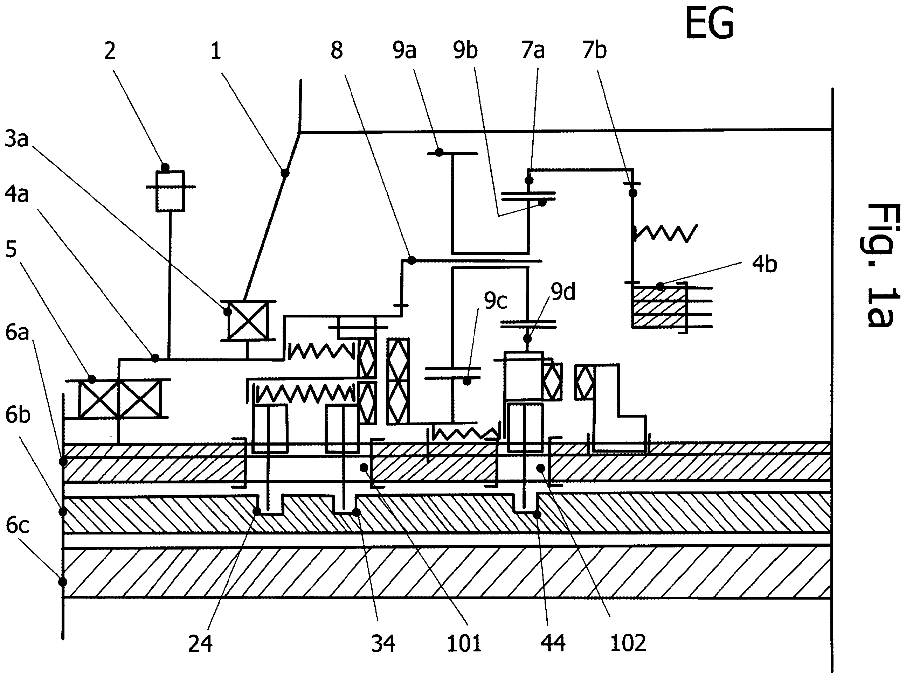

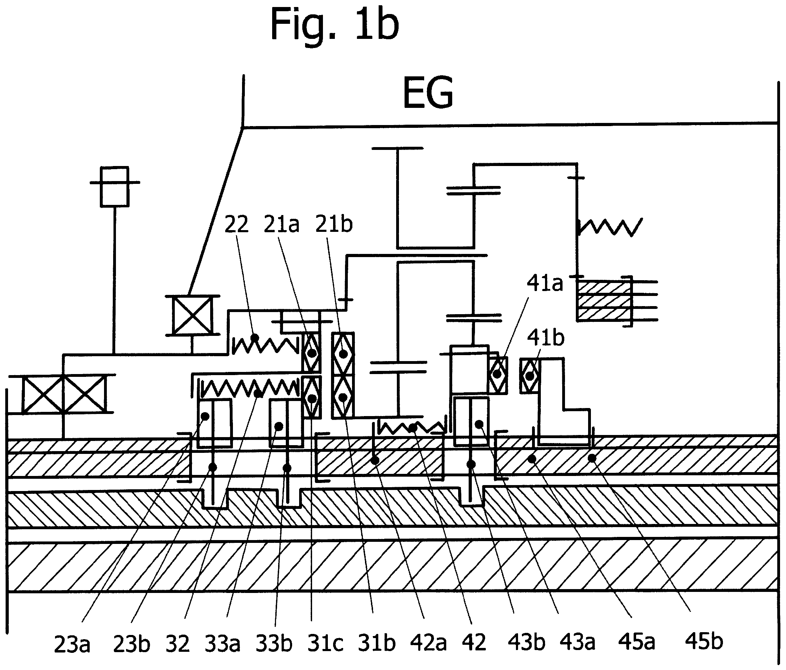

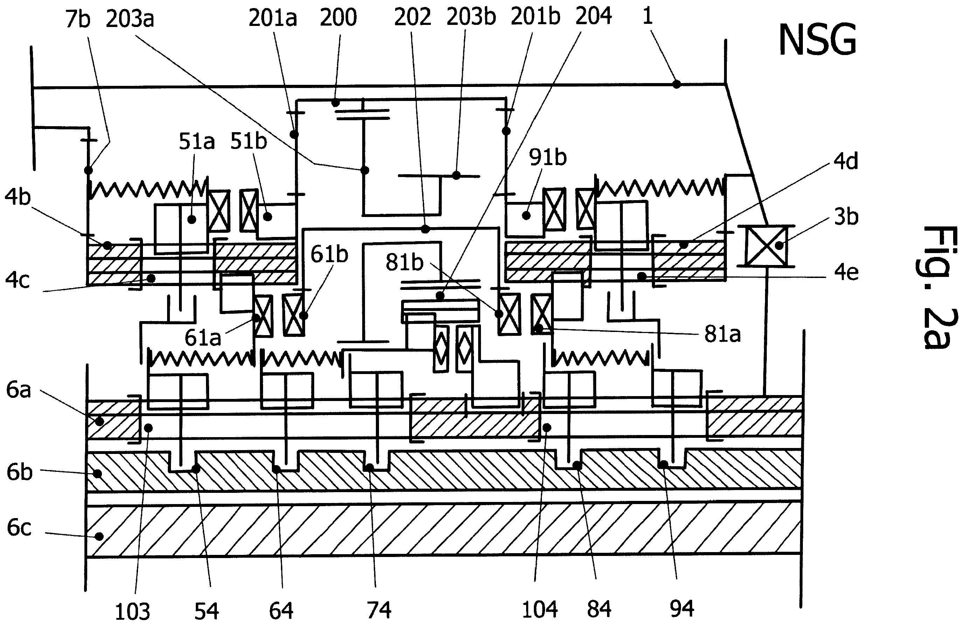

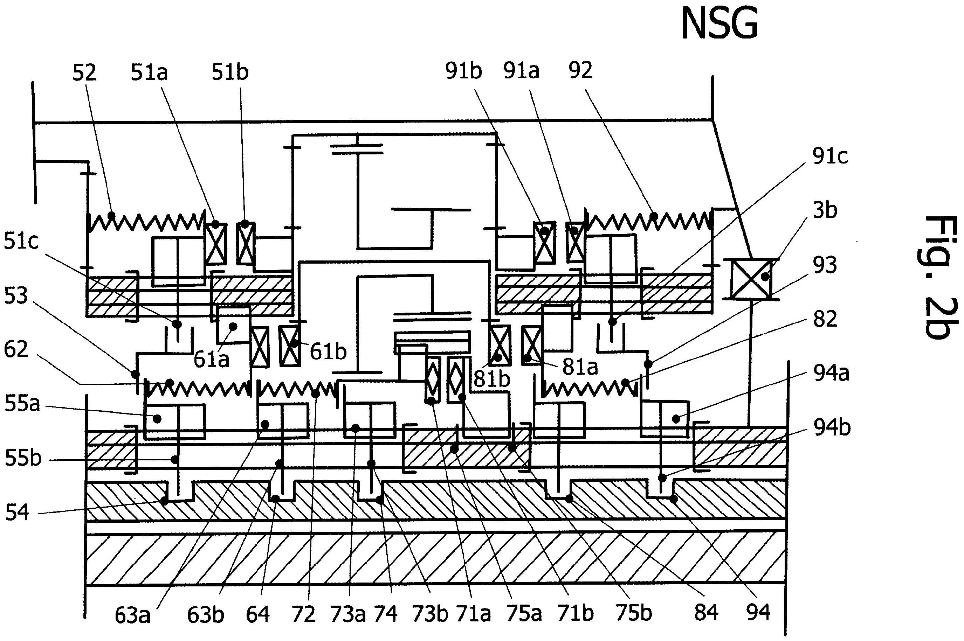

Die Erfindung wird nachfolgend an einem Ausführungsbeispiel mit Bezug auf die Fig. 1a/b, Fig. 2a/b, erläutert.

Eine bevorzugte Ausführung ist ein Neunganggetriebe mit konstanten Gangsprüngen von ca. 24% bei einem Übersetzungsbereich von ca. 560% . Die Eingangsübersetzung ist so gewählt, dass mit der Sekundärübersetzung des Ketten- bzw. Riemengetriebes bei vorne z. B. 40 Zähnen und an der Getriebenabe einem Ritsel mit z. B. ca. 36 Zähnen eine Gesamtübersetzung i_ges für den ersten Gang von ca. i_ges. = 1,7 resultiert. Für den neunten Gang ergibt sich hierdurch eine Übersetzung 0,30.

Erreicht wird dies durch die Koppelung zweier Dreigangplanetengetriebe.

Ein erstes Getriebe besteht gem. Fig. 1a aus einem Steg 8 mit Zweifach Stufenplaneten 9a und 9b, einem Hohlrad 7a mit Seitenwand 7b und zwei Sonnenrädern 9c und 9d, die mit den korrespondierenden Planeten kämmen. Der Steg 8 wird von einem Antreiber 4a, auf dem das Ritsel 2 drehfest befestigt ist, angetrieben. Der Abtrieb des ersten Getriebes erfolgt über das Hohlrad 7a. Wird das Getriebe im Blockumlauf betrieben, so erhält man den direkten Gang mit i_1 =1. Die Übersetzung mit i_2 = 1/1,24 = 0,8065 erhält man, wenn das kleinere der beiden Sonnenräder achsfest gesetzt wird. Die Übersetzung mit i_3 = 1/1,5376 = 0,65 erhält man, wenn das größere der beiden Sonnräder achsfest gesetzt wird. Somit übersetzt das Getriebe ins Schnelle.

Eine erste bevorzugte Ausführung eines zweiten Getriebes besteht aus zwei gleichen, zueinander gespiegelt angeordneten Planetengetrieben, bestehend aus jeweils einem Hohlrad, einem Sonnenrad und Zweifach - Stufenplaneten, die über drehfest miteinander verbundene Stege gekoppelt sind (nicht dargestellt). Das erste Teilgetriebe dieses Nachschaltsatzes ist ein Untersetzungsgetriebe mit ca. i_4 = 1,24^3 = 1,91 und das zweite Teilgetriebe ein Übersetzungsgetriebe mit i_6 = 1/i_4 = 0,5245. Der direkte Gang mit i_5 = 1 stellt sich ein, wenn beide Teilgetriebe als Block umlaufen.

Eine zweite bevorzugte Ausführung eines zweiten Getriebes gem. Fig. 2a besteht aus einem Planetengetriebe identisch mit einem Teilgetriebe der ersten bevorzugten Ausführung. Die drei Gänge der ersten bevorzugten Ausführung werden realisiert, indem der Getriebeeingang zwischen Hohlrad und Steg umgeschaltet wird. In gleicher Weise wird mit dem Abrieb verfahren. An den Übersetzungen ändert sich damit nichts.

Die nachfolgende Tabelle zeigt, dass bei den Gängen G1, G5, G6, G7 nur ein Planetensatz an der Leistungsübertragung beteiligt ist und bei den Gängen G2, G3, G8 und G9 lediglich deren zwei. Das steht für einen guten Wirkungsgrad der Getriebenabe. Gang G4 kommt ohne Abwälzbewegung der Zahnräder aus.

| Getriebe EG | | | | Getriebe NSG | | | |
|---|---|---|---|---|---|---|---|
| **Gang Gn** | **i_1** | **i_2** | **i_3** | **i_4** | **i_5** | **i_6** | **i_Gn** |
| 1 | 1 | | | 1,91 | | | 1,91 |
| 2 | | 0.81 | | 1,91 | | | 1,55 |
| 3 | | | 0.65 | 1,91 | | | 1,24 |
| 4 | 1 | | | | 1 | | 1 |
| 5 | | 0.81 | | | 1 | | 0,81 |
| 6 | | | 0.65 | | 1 | | 0,65 |
| 7 | 1 | | | | | 0.5245 | 0,53 |
| 8 | | 0.81 | | | | 0.5245 | 0,43 |
| 9 | | | 0.65 | | | 0.5245 | 0,34 |
| | | | | | | | |

Erfindungsgemäß wird das Mehrganggetriebe mit Axialkupplungen geschaltet. Eine Kupplung wird von zwei sich gegenüberliegenden mittels Zwischengliedern zu betätigenden Scheiben mit in einer Richtung wirkenden, auf einem Kreisring senkrecht zur Rotationsachse aufgebrachten, axial wirkenden Sperrverzahnungen gebildet. Im Folgenden wird eine Kupplung, welche den Blockumlauf auslöst, "Blocksperre", welche den Mitlauf des Sonnenrades bei einem Antrieb durch den Steg verhindert, "Mitlaufsperre" und welche den Rücklauf eines Sonnenrades beim Antrieb durch das Hohlrad, "Rücklaufsperre" genannt. Mitlauf bedeutet dann gleicher Drehsinn wie das antreibende Riemen oder Kettenrad. Soll mit gleichem Drehsinn Drehmoment übertragen werden, wird der Begriff "Mitnehmer" benutzt.

In der folgenden Tabelle sind die in den Figuren verwendeten Symbole mit deren Bedeutung aufgelistet. In den Figuren 1b und 2b werden die Bezugszeichen der Kupplungen in Zehnerschritten durchgezählt und die der zugehörigen Teile bzw. Elemente in Einerschritten weitergezählt. In den Figuren 4, 5 und 6, die die Schaltzustände der Gänge G1, G5, G9 beschreiben, werden dann nur noch die Kupplungsnummem genannt.

| | |
|---|---|
| 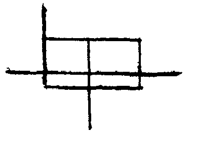 | **Schiebering mit Zylinderstift und Außenbund, axial verschiebbar, Rotation auf einer Welle oder Achse durch Innenverzahnung blockiert** |
| 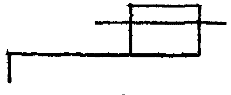 | **Schiebering mit Innenbund, axial verschiebbar, Rotation in einer Welle oder Achse durch Außenverzahnung blockiert.** |
| 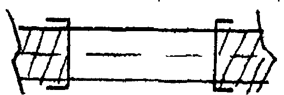 | **Langloch in einer Hohlachse oder Hohlwelle, um einen Zylinderstift durchgreifen zu lassen; dargestellt durch fehlende Schraffur und nach außen gerichtete, eckige Klammern.** |
| 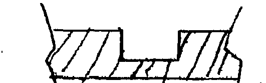 | **Umlaufende Nut in der Schaltwelle zur Führung und axialen Bewegung der Zylinderstifte** |
| 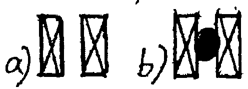 | **Rücklaufsperre oder Mitnehmerkupplung; koppelt in Drehrichtung des Antreibers** |
| | **a) offen, b) geschlossen** |
| 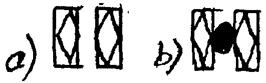 | **Mitlaufsperre, koppelt gegen die Drehrichtung des Antreibers** |
| | **a) offen, b) geschlossen** |
| 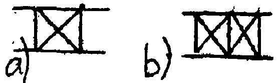 | **Wälzlager einfach , zweifach** |
| 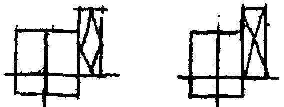 | **Sperren, axial verschiebbar mit Zylinderstift, durch Innenverzahnung drehfest** |
| 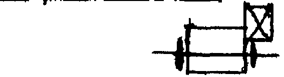 | **Sperren, mittels Sicherungsringen axial festgesetzt, durch Innenverzahnung drehfest** |
| 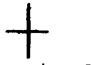 | **lösbare Verbindung zweier Bauteile** |
| 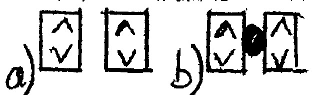 | **bidirektional wirkende Kupplung ;** |
| | **a) ungescbaltet, b) geschaltet** |

Die bevorzugte Hinterradnabe, Fig. 1a,b und Fig. 2a,b, besteht aus einer Nabenhülse 1 gelagert mittels Wälzlager 3a auf dem Antreiber 4a und mit dem Wälzlager 3b auf der Achse 6a. Auf dem Antreiber 4a befindet sich, drehfest aber lösbar mit diesem verbunden, ein Antriebsritsel 2 für Riemen- oder Kettenantrieb. Das Wälzlager 5 lagert den Antreiber 4a auf der Achse 6a. Innerhalb der Achse 6a befindet sich eine Schalttrommel 6b. Die Langlöcher 101, 102, 103 und 104 sind parallel zur Rotationsachse angeordnet und ermöglichen den Durchgriff der als Stellglieder fungierenden Zylinderstifte in die umlaufenden Nuten 24, 34, 44, 54, 64, 74, 84 und 94 der Schalttrommel 6b. Die Nuten sind so ausgebildet, dass die vorgesehenen Bewegungen der Schaltstifte zur Schaltung der einzelnen Gänge ausgeführt werden. Die Druckfedern 22, 32, 42, 52, 62, 72, 82 und 92 sind so angeordnet, dass die Öffnung der Kupplungen immer gegen die Kraft dieser Federn erfolgt.

Bei einer vorteilhaften Variante ist eine vollständige Steuerungsstruktur auf 180 Grad des Umfanges der Schalttrommel und der Hohlachse angeordnet. Dadurch ergibt sich der große Vorteil, dass noch eine exakte Kopie derselben auf deren zweiten Umfangshälften anzuordnen ist und damit über jeweils zweite Zylinderstifte die Kupplungsscheiben gegenüberliegend parallel anzusteuern sind. Das verhindert eine etwaige Schalthemmung durch eine Kippbelastung, die bei einseitiger Ansteuerung unvermeidlich auftritt.

Das zweite Getriebe NSG, Fig. 2a, besteht aus einer Antreiberhülse 4b mit Innen- und Außenverzahnung und mindestens einem, bevorzugt aber zwei oder drei, um 180 Grad bzw. 120 Grad versetzten Langlöchern 4c, einer Abtriebshülse 4d mit ebenfalls Innen- und Außenverzahnung sowie mindestens einem, bevorzugt aber zwei oder drei, um 180 Grad bzw. 120 Grad versetzten Langlöchem 4e. Die Antreiberhülse ist über die Außenverzahnung mit der Seitenwand 7b verbunden und die Abriebshülse mit der Nabenhülse 1. Die Getriebestufe selbst besteht aus dem Hohlrad 200, den Seitenwänden 201a und 201b, wovon mindestens eine über eine lösbare Verbindung mit dem Hohlrad 200 verbindbar ausgeführt wird, desweiteren aus dem Steg 202 und den drehfest miteinander verbundenen Planeten 203a und 203b und dem Sonnenrad 204. Der Planet 203a kämmt mit dem Hohlrad 200 und der Planet 203b mit dem Sonnenrad 204. Die Seitenwand 201a ist mit dem Kupplungsteil 51b und die Seitenwand 201b mit dem Kupplungsteil 91b drehfest verbunden. Die Kupplungsteile 61b und 81b sind mit dem Steg 202 drehfest aber lösbar verbunden. Bei nicht geschalteten Kupplungen können der Steg und das Hohlrad frei drehen.

Die Kupplungsbauteile sind in der Reihenfolge, in der sie auf der Achse 6a von der Antriebsseite aus aufeinander folgen in Zehnerschritten, jeweils beginnend mit 20 bis 90 durchnummeriert; Fig. 1a - 2b.

Die Kupplung 20 schaltet den Blockumlauf des ersten Getriebes G1, indem das Sonnenrad 9c mit dem Antreiber 4a und damit mit dem Steg 8 drehfest verbunden oder auch wieder gelöst wird.

Kupplung 20 schaltet die Gänge 1, 4, 7. Die Mitlaufsperre 21a greift in das, mit der Sonne fest verbundene Gegenstück 21b und hindert das Sonnenrad am Überholen des Steges 8. Die weiteren Bestandteile sind eine Rückstellfeder 22, die sich im Antreiber 4a abstützt, ein Schieber 23a mit einem Zylinderstift 23b, der von der Nut 24 gesteuert wird.

Die Kupplung 30 schaltet den zweiten Gang des ersten Getriebes, indem das Sonnenrad 9c achsfest gesetzt wird. Die Kupplung 30 schaltet die Gänge 2, 5, 7 des Gesamtgetriebes.

Die Kupplung 40 schaltet den dritten Gang des ersten Getriebes, indem das Sonnenrad 9d achsfest gesetzt wird. Die Kupplung 40 schaltet die Gänge 3, 6, 9 des Gesamtgetriebes.

Das Sonnenrad 9d ist als Ring mit einer Innenverzahnung ausgebildet, in der das als Mitlaufsperre ausgebildete Kupplungsteil 41a (Fig.9) drehfest aber axial verschiebbar geführt wird. Das Gegenstück 41b (Fig. 10) weist eine Innenverzahnung auf, die dieses drehfest mit der Achse 6a verbindet. Die Sicherungsringe 44a und 44b verhindern eine axiale Bewegung.

Ein Schieber 43a mit Zylinderstift 43b wird von der Nut 44 gesteuert. Die Feder 42 stützt sich an einem in die Achse 6a eingelassenen Sicherungsring 42a ab.

Die Kupplungen 50, 70, 80 schalten den ersten Gang des zweiten Getriebes G2, indem die Kupplungsteile 51a (mit Zylinderstift 51c) und 51b das Hohlrad mit dem Antreiber 4b drehfest verbinden, die Kupplungsteile 81b und 81a (mit Zylinderstift 81c) den Steg mit der Abtriebshülse 4d drehfest verbinden und die Kupplungsteile 71a (Fig.11) und 71b das Sonnenrad 204 achsfest setzen.

Ist diese Konfiguration geschaltet, erhält man zusammen mit dem ersten Getriebe die Gänge 1, 2 und 3.

Die weiteren Bestandteile der Kupplung 50 sind eine Rückstellfeder 52, die sich an der Seitenwand 7b abstützt, ein Nutring 53 mit Innenbund, einem Schieber 55a mit einem Zylinderstift 55b, der von der Nut 54 gesteuert wird.

Die Kupplung 70 ist als bidirektionale Kupplung ausgeführt, da sich die Richtung des Drehmoments bei Umschaltung des Eingangs vom Hohlrad auf den Steg umkehrt. Die weiteren Bestandteile der Kupplung 70 sind, eine Rückstellfeder 72, die sich am Außenbund des Schiebers 63a abstützt, ein Schieber 73a mit einem Zylinderstift 73b, der von der Nut 74 gesteuert wird.

Die weiteren Bestandteile der Kupplung 80 sind eine Rückstellfeder 82, die sich am Außenbund des Schiebers 94a abstützt, und ein Schieber 83a mit einem Zylinderstift 83b, der in der Nut 84 geführt ist.

Die Kupplungen 50 und 90, Fig. 2a, verbinden die Antriebshülse 4b mit der Abtriebshülse 4c über das Hohlrad 200 und überbrücken damit das Getriebe.

Das gleiche Ergebnis erhält man durch Einschalten der Kupplungen 60 und 80, wobei der Steg das Drehmoment überträgt. In beiden Fällen kann die Sonne achsfest verbleiben, was aber wegen der Leistungsverluste nur kurzzeitig zu Schaltzwecken genutzt wird.

Für den Blockumlauf gibt es die folgenden Möglichkeiten, wobei das Sonnenrad durch Öffnen der Kupplung 70 stets frei mitdrehen kann.
Variante 1: Die Kupplungen 50, 60, 90 geschlossen, Kupplung 70 geöffnet.
Variante 2: Die Kupplungen 50, 80, 90 geschlossen, Kupplung 70 geöffnet.
Variante 3: Die Kupplungen 50, 60, 80, 90 geschlossen, Kupplung 70 geöffnet.
Variante 4: Die Kupplungen 60, 80, 90 geschlossen, Kupplung 70 geöffnet.
Variante 5: Die Kupplungen 50, 60, 90 geschlossen, Kupplung 70 geöffnet.
Variante 4: Die Kupplungen 50, 60, 80 geschlossen, Kupplung 70 geöffnet.

Einige der Möglichkeiten werden beispielhaft in der vorgeschlagenen Schaltfolge genutzt.

In dieser Konfiguration wird der zweite Gang des zweiten Getriebes realisiert. Damit können dann die Gänge 4, 5 und 6 geschaltet werden.

Die Kupplungen 60, 70 und 90 schalten den dritten Gang des zweiten Getriebes, indem die Kupplungsteile 61a und 61b den Steg 202 mit dem Antreiber 4b drehfest verbinden, die Kupplungsteile 91b und 91a ( mit Zylinderstift 91c) das Hohlrad 200 mit der Abtriebshülse 4d drehfest verbinden und die Kupplungsteile 71a und 71b das Sonnenrad 204 achsfest setzen.

In dieser Konfiguration wird der dritte Gang des zweiten Getriebes realisiert. Damit können dann die Gänge 7, 8 und 9 geschaltet werden.

Die Lösung der der Erfindung zu Grunde liegenden Aufgabe ermöglicht die Verwendung von Nadellagern zur Lagerung aller Planeten. Durch die hohe Belastbarkeit des Schaltgetriebes können Übersetzungen zwischen Tretlagerkettenblatt und Nabenantriebsritsel von bis zu i= 1 verwendet werden. Die ausschließliche Verwendung von Axialkupplungen ermöglicht besonders gut eine Öffnung auch unter Last. Bei den meisten Schaltvorgängen gehen die Kupplungen schon vor deren Öffnung in den Freilaufmodus über, so dass hier ohne Last geöffnet werden kann. Die Anzahl verschiedener Fertigungsteile ist spürbar kleiner als beim Stand der Technik. Das Gleiche gilt auch für die Gesamtmasse des Schaltgetriebes. Auf Grund der Getriebestruktur sind nur wenige Zahnräder gleichzeitig im Eingriff, was für einen hohen Wirkungsgrad in den einzelnen Gängen sorgt.
- Fig. 1a, 1b: : Getriebe EG
- Fig. 2a, 2b: : Getriebe NSG

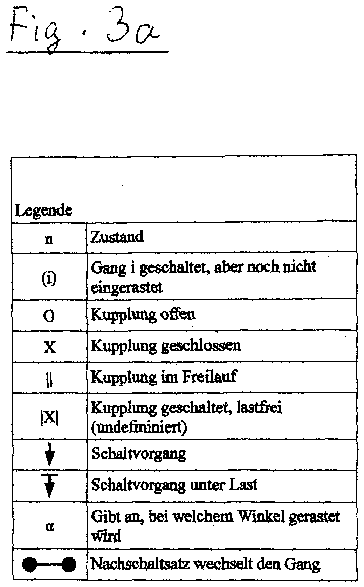

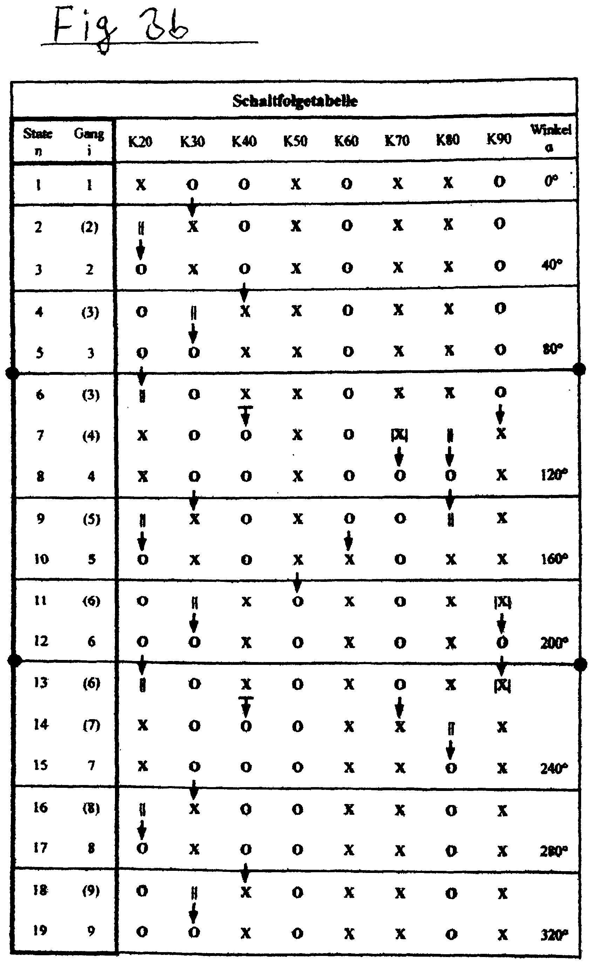

- Fig. 3A, 3b: : Schaltfolgetabelle mit zugehöriger Legende

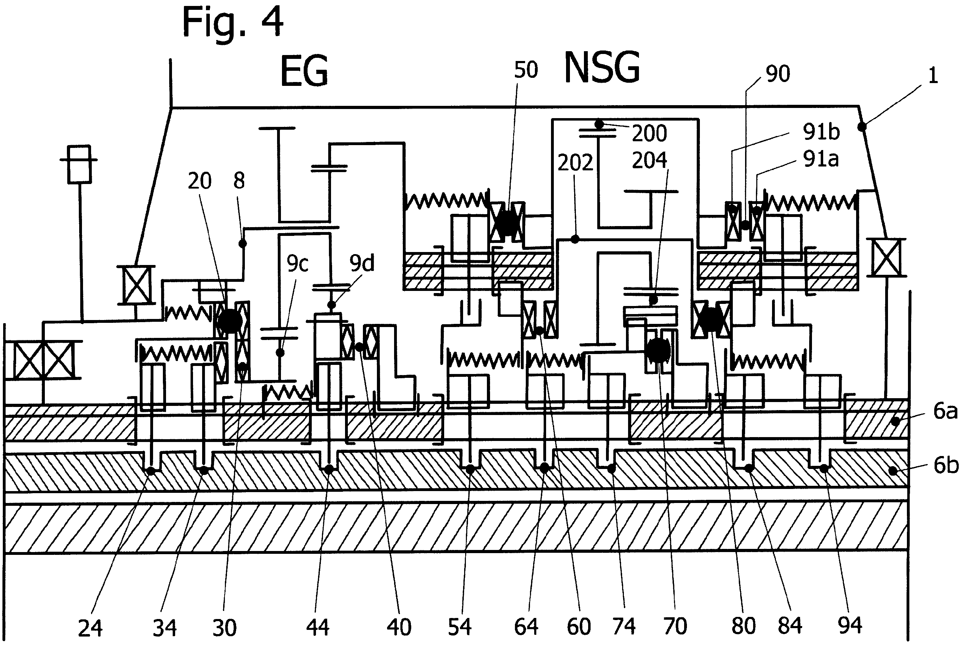

- Fig. 4: : Gesamtgetriebe im ersten Gang

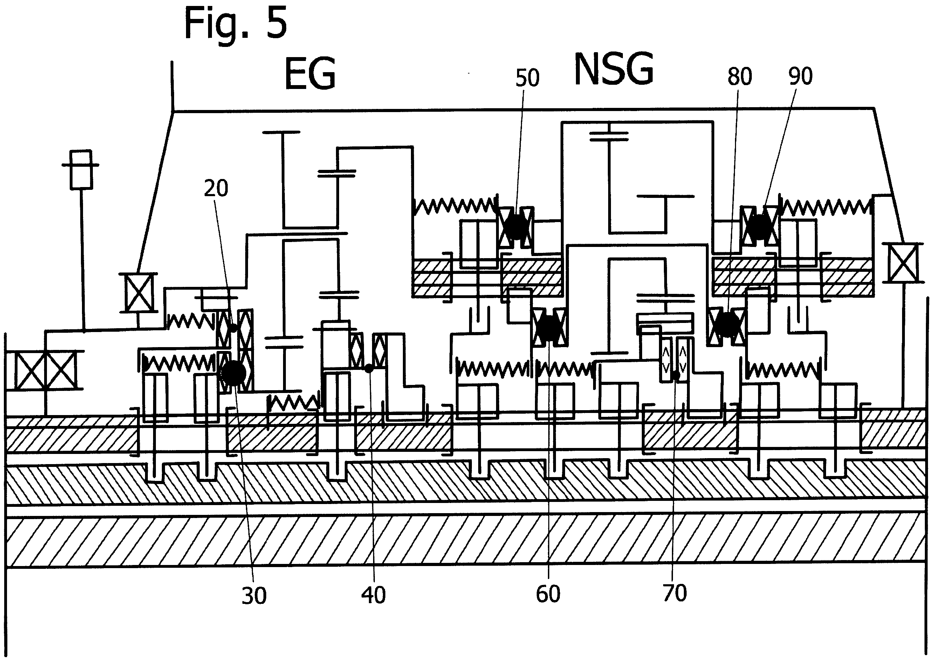

- Fig. 5: : Gesamtgetriebe im 5-ten Gang

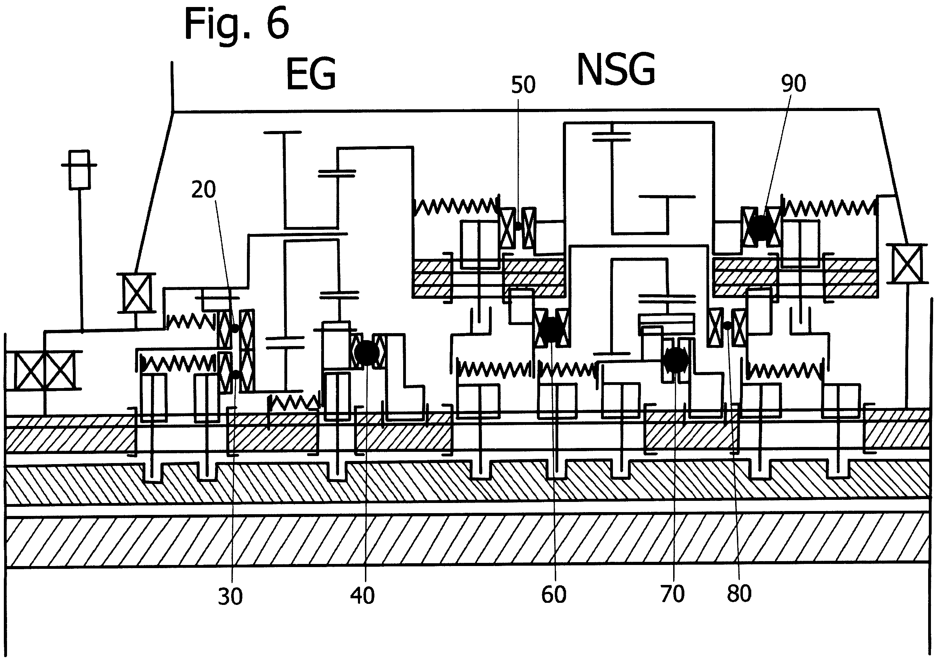

- Fig. 6: : Gesamtgetriebe im 9-ten Gang
- Fig. 7: : Perspektivische Ansicht der Schalttrommel
- Fig. 8: : Eine Seitenansicht der Schalttrommel
- Fig. 9: : Ein perspektivische Ansicht der Kupplungshälfte 41a
- Fig. 10: : Ein perspektivische Ansicht der Kupplungshälfte 41b
- Fig. 11: : Ein perspektivische Ansicht der Kupplung 70 mit dem Sonnenrad 204

## Patentansprüche

1. Mehrganggetriebe auf einer zentralen Achse (6a) montiert mit einer antriebsseitigen Hohlwelle (4a) und einer abtriebsseitigen Nabenhülse (1) und mit zwei koaxial dazwischen bzw. darin angeordneten, mindestens zweistufigen Planetengetrieben (EG, NSG), jeweils mit Sonnenrädern-, über zugehörige Stege miteinander verbundenen Planetenrädern- und Hohlrädern, die jeweils in einen Blockumlauf und mehrere gestufte Übersetzungsmodi schaltbar sind,
**dadurch gekennzeichnet, dass**
das erste Planetengetriebe (EG) an seinem Steg (8) angetrieben ist und mittels dreier Axialkupplungen (20, 30, 40) wahlweise in den Blockumlauf zum Schalten eines direkten Gangs oder durch Achsfestlegung einzelner Sonnenräder (9c, 9d) in Übersetzungsmodi schaltbar ist, und
das zweite Planetengetriebe (NSG) durch weitere Axialkupplungen (50, 60, 70, 80, 90) durch eine Achsfestlegung des Sonnenrades (204) und durch wahlweise Umschaltung des An- und Abtriebs zwischen dem Hohlrad (200) und dem Steg (202) des zweiten Planetengetriebes (NSG) in einen Übersetzungsmodus ins Langsame und einen ins Schnelle sowie durch Schalten in den Blockumlauf in einen direkten Gang schaltbar ist.

2. Mehrganggetriebe nach Anspruch 1, **dadurch gekennzeichnet, dass** mittels axial verschieblicher Steuerschieber kuppelnd federbelastete, sich radial erstreckende Kupplungsringe (21a, 21b, und 91a, 91b) einer jeweiligen Gangstufe gemäß freizustellen sind, indem die Steuerschieber in gewendelt zirkularen Nuten (24,. . . ,94) in einer koaxialen Schalttrommel (6b) und in radialen, parallel zur Rotationsachse des Getriebes orientierten Schlitzen einer sie umschließenden Hohlachse (6a) geführt, jeweils die zugehörigen Kupplungsringe schaltend betätigen.

3. Mehrganggetriebe nach Anspruch 2, **dadurch gekennzeichnet, dass** die Nuten (24,. . .,94) derart ausgebildet sind, dass ein Neunganggetriebe mit pro Gang beispielsweise mit 40 Grad Winkeldrehung, insgesamt also innerhalb nur einer Umdrehung der Schalttrommel (6b), einzustellen sind, wobei mindestens eine Zwischenschaltkombination durchlaufen wird.

4. Mehrganggetriebe nach Anspruch 3, **dadurch gekennzeichnet, dass** bei vier der neun Gänge nur ein Planetensatz und bei vier weiteren der neun Gänge beide Planetensätze aktiviert sind und außerdem einer der Gänge, der direkte Gang, ohne Abwälzbewegung der Zahnräder arbeitet.

5. Mehrganggetriebe nach einem der vorstehenden Ansprüche, **dadurch gekennzeichnet, dass** das erste Getriebe die Drehzahlumsetzungen auf i_1=1, i_2 ca. 0,81 und i_3 ca. 0,65 erbringt und das zweite Getriebe (NSG) die Drehzahlumsetzungen auf i_4 ca. 1,91, i_5=1 und i_6 ca. 0,52 erbringt so, dass weitgehend konstante Gangsprünge von ca. 24% bei einem Übersetzungsbereich von etwa 560% vorliegen.

6. Mehrganggetriebe nach Anspruch 2 oder Anspruch 3, **dadurch gekennzeichnet, dass** die Steuerschieber jeweils mit einem Zylinderstift in die zugehörige Nut und den radialen, parallel zur Rotationsachse des Getriebes orientierten Schlitz eingreifend geführt wird.

7. Mehrganggetriebe nach Anspruch 1, **dadurch gekennzeichnet, dass** das erste Planetengetriebe (EG) ein drei oder vierstufiges Planetengetriebe ist, das an seinem Steg angetrieben ist und jeweils mittels einer Kupplung durch Festlegung eines zugehörigen Sonnenrades in einen der genannten Übersetzungsmodi geschaltet wird, wodurch insgesamt ein Zwölf- bzw. Fünfzehnganggetriebe gebildet wird.

8. Mehrganggetriebe nach Anspruch 2, **dadurch gekennzeichnet, dass** die Kupplungsringe (21a/b, 31a/b, 41a/b, 51 a/b, 61a/b, 81a/b, 91a/b) eine radiale Profilierung aufweisen, die die Kraftübertragung bewirkt.

9. Mehrganggetriebe nach Anspruch 8, **dadurch gekennzeichnet, dass** die radiale Profilierung der Kupplungsringe (21a/b, 31a/b, 41a/b, 51 a/b, 61a/b, 81a/b, 91 a/b), die nur in einer Drehrichtung aktiviert werden, derart unsymmetrisch profiliert sind, dass die druckbelasteten Flanken steiler als die dazu rückseitigen sind.

10. Mehrganggetriebe nach Anspruch 1, **dadurch gekennzeichnet, dass** deren Sonnen-, Planeten- und Hohlräder, die nur in einer Drehrichtung aktiviert werden, eine unsymmetrische Profilierung der Radzähne aufweisen, derart, dass die auf Zugkraft belasteten Flanken einen größeren Zahneingriffswinkel aufweisen als die dazu rückseitigen Flanken.

11. Mehlganggetriebe nach Anspruch 1, **dadurch gekennzeichnet, dass** der Antreiber (4a) mit einem Zahnriemen- oder Kettenritzel bestückt ist, das eine Zähnezahl aufweist, die in etwa der eines korrelierten Kurbelabtriebblattes entspricht.

12. Mehrganggetriebe nach Anspruch 11, **dadurch gekennzeichnet, dass** das Zahnriemenritzel 34 Zähne und das Kurbelabtriebsblatt 42 Zähne aufweisen.

13. Mehrganggetriebe nach Anspruch 8, **dadurch gekennzeichnet, dass** das Sonnenrad (204) in beiden Drehrichtungen von nur einer Kupplung achsfest gesetzt wird.

14. Mehrganggetriebe nach Anspruch 8, **dadurch gekennzeichnet, dass** die in beide Drehrichtungen zu koppelnde Kupplungsteile (71a,71b) eine symmetrische Profilierung aufweisen und damit das Sonnenrad (204) in beiden Drehrichtungen achsfest setzen können.

15. Mehrganggetriebe nach Anspruch 2 und 6, **dadurch gekennzeichnet, dass** die Strukturen der gewendelten Nuten in der Schalttrommel sowie der Schlitze in der Hohlachse, die der Schaltung sämtlicher Gänge dienen, auf maximal 180 Grad deren Umfänge angeordnet sind und davon Kopien auf deren anderen Umfangshälften angeordnet sind, in die jeweils ein weiterer Zylinderstift eingreift, der jeweils den zugehörigen Kupplungsring andererseits parallel betätigt.

## Claims

1. A multi-speed transmission mounted on a central axis (6a) with a hollow shaft (4a) on the input side and a hub sleeve (1) on an output side and with two at least two-stage planetary gearboxes (EG, NSG) arranged coaxially therebetween or therein, each with sun gearwheels, planetary gearwheels and ring gearwheels connected to each other via associated webs, which can each be shifted into a block rotation and multiple stepped transmission modes,
**characterized in that**
the first planetary gearbox (EG) is driven at its web (8) and is selectively switchable by three axial clutches (20, 30, 40) into block rotation for shifting a direct gear or into transmission modes by axis fixing of individual sun gearwheels (9c, 9d), and
the second planetary gearbox (NSG) is switchable by further axial clutches (50, 60, 70, 80, 90) by fixing the axis of the sun gearwheel (204) and by selectively switching the input and output between the ring gearwheel (200) and the web (202) of the second planetary gearbox (NSG) into a slow and a fast transmission mode and into a direct gear by switching into the block rotation.

2. The multi-speed transmission of claim 1, **characterized in that** spring-loaded, radially extending clutch rings (21a, 21b, and 91a, 91b) of a respective gear stage are to be disengaged by means of axially displaceable control sliders, by the control sliders being guided in helically circular grooves (24, ...94) in a coaxial shift drum (6b) and in radial slots, oriented parallel to the axis of rotation of the transmission, of a hollow axle (6a) surrounding them, each actuating the associated clutch rings in a shifting manner.

3. The multi-speed transmission of claim 2, **characterized in that** the grooves (24, ..., 94) are formed in such a way that a nine-speed transmission can be set with, for example, 40 degrees of angular rotation per gear, i.e. in total within only one rotation of the shift drum (6b), wherein at least one intermediate shift combination is passed through.

4. The multi-speed transmission of claim 3, **characterized in that** in first four of the nine gears only one set of planetary gear wheels is activated and in second four of the nine gears both sets of planetary gearwheels are activated and, in addition, one of the gears, the direct gear, operates without rolling movement of the gear wheels.

5. The multi-speed transmission of claim 1, **characterized in that** the first transmission provides the speed conversions to i_1=1, i_2 approx. 0.81 and i_3 approx. 0.65 and the second transmission (NSG) provides the speed conversions to i_4 approx. 1.91, i_5=1 and i_6 approx. 0.52 so that there are largely constant gear steps of approx. 24% with a transmission ratio range of approx. 560%.

6. The multi-speed transmission of claim 2 or claim 3, **characterized in that** the control sliders are each guided with a cylindrical pin engaging in the associated groove and the radial slot oriented parallel to the axis of rotation of the transmission.

7. The multi-speed transmission of claim 1, **characterized in that** the first planetary gearbox (EG) is a three- or four-stage planetary gearbox which is driven at its web and is shifted into one of the said transmission modes in each case by a clutch by fixing an associated sun gearwheel, thereby forming a twelve- or fifteen-speed gearbox overall.

8. The multi-speed transmission of claim 2, **characterized in that** the clutch rings (21a/b, 31a/b, 41a/b, 51 a/b, 61a/b, 81a/b, 91a/b) comprise a radial profiling which effects the power transmission.

9. The multi-speed transmission of claim 8, **characterized in that** the radial profiling of the clutch rings (21a/b, 31a/b, 41a/b, 51 a/b, 61a/b, 81a/b, 91 a/b), which are only activated in one direction of rotation, are profiled asymmetrically such that the pressure-loaded flanks are steeper than those on the rear side thereof.

10. The multi-speed transmission of claim 1, **characterized in that** its sun, planetary and ring gearwheels, activated in only one direction of rotation, comprise an asymmetrical profiling of the wheel teeth such that the flanks loaded with tensile force have a greater tooth pressure angle than the flanks on the rear side thereof.

11. The multi-speed transmission of claim 1, **characterized in that** the driver (4a) is equipped with a toothed belt or chain pinion comprising a number of teeth corresponding approximately to that of a correlated crank output blade.

12. The multi-speed transmission of claim 11, **characterized in that** the toothed belt pinion comprises 34 teeth and the crank output blade comprises 42 teeth.

13. The multi-speed transmission of claim 8, **characterized in that** the sun gear (204) is axially fixed in both directions of rotation by only one clutch.

14. The multi-speed transmission of claim 8, **characterized in that** the clutch parts (71a, 71b) to be coupled in both directions of rotation comprise a symmetrical profiling and are thus configured to set the sun gear wheel (204) axially fixed in both directions of rotation.

15. The multi-speed transmission of claims 2 and 6, **characterized in that** the structures of the helical grooves in the shift drum and of the slots in the hollow axis, which serve for shifting all gears, are arranged at a maximum of 180 degrees of their circumferences and copies thereof are arranged on their other circumferential halves, in each of which a further cylinder pin engages, which in each case actuates the associated clutch ring in parallel on the other side.

## Revendications

1. Transmission à plusieurs vitesses montée sur un axe central (6a) avec un arbre creux (4a) côté entrée et un manchon de moyeu (1) côté sortie et avec deux réducteurs planétaires (EG, NSG) à au moins deux étages, disposés coaxialement entre eux ou à l'intérieur de ceux-ci, chacun avec des roues planétaires et des roues creuses reliées entre elles par des âmes associées, qui peuvent être commutées respectivement dans une rotation en bloc et dans plusieurs modes de transmission étagés,
**caractérisée en ce que**
le premier réducteur planétaire (EG) est entraîné au niveau de l'âme (8) et peut être commuté au choix, au moyen de trois accouplements axiaux (20, 30, 40), dans la circulation en bloc pour passer une vitesse directe ou dans des modes de transmission par fixation de l'axe de roues solaires individuelles (9c, 9d), et
le deuxième réducteur planétaire (NSG) peut être commuté par d'autres embrayages axiaux (50, 60, 70, 80, 90) par une fixation de l'axe de la roue solaire (204) et par une commutation au choix de l'entraînement et de la sortie entre la couronne (200) et l'âme (202) du deuxième réducteur planétaire (NSG) dans un mode de démultiplication au ralenti et un mode de démultiplication au rapide ainsi que dans une vitesse directe par commutation dans la rotation de bloc.

2. Transmission à plusieurs vitesses selon la revendication 1, **caractérisée en ce que** des anneaux d'embrayage (21a, 21b et 91a, 91b) s'étendant radialement et sollicités par des ressorts peuvent être dégagés d'un rapport respectif au moyen de tiroirs de commande déplaçables axialement, **en ce que** les tiroirs de commande sont logés dans des rainures circulaires hélicoïdales (24,. ...94) dans un tambour de commande coaxial (6b) et dans des fentes radiales, orientées parallèlement à l'axe de rotation de la boîte de vitesses, d'un axe creux (6a) qui les entoure, actionnent respectivement les anneaux d'embrayage correspondants en commutant..

3. Transmission à plusieurs vitesses selon la revendication 2, **caractérisée en ce que** les rainures (24, ..., 94) sont réalisées de telle sorte qu'une transmission à neuf vitesses avec par exemple 40 degrés de rotation angulaire par vitesse, donc au total en l'espace d'une seule rotation du tambour de commande (6b), doit être réglée, au moins une combinaison de changement de vitesse intermédiaire étant parcourue.

4. Transmission à plusieurs vitesses selon la revendication 3, **caractérisée en ce que** pour quatre des neuf vitesses, seul un train planétaire est activé et pour quatre autres des neuf vitesses, les deux trains planétaires sont activés et en outre, l'une des vitesses, la vitesse directe, fonctionne sans mouvement de roulement des roues dentées.

5. Transmission à plusieurs vitesses selon l'une des revendications précédentes, **caractérisée en ce que** la première transmission fournit les rapports de vitesse sur i_1=1, i_2 environ 0,81 et i_3 environ 0,65 et la deuxième transmission (NSG) fournit les rapports de vitesse sur i_4 environ 1,91, i_5=1 et i_6 environ 0,52 de telle sorte qu'il existe des sauts de vitesse largement constants d'environ 24% pour une plage de rapports d'environ 560%.

6. Transmission à plusieurs vitesses selon la revendication 2 ou la revendication 3, **caractérisée en ce que** le tiroir de commande est guidé respectivement par une goupille cylindrique en prise dans la rainure correspondante et la fente radiale orientée parallèlement à l'axe de rotation de la transmission.

7. Transmission à plusieurs vitesses à plusieurs vitesses selon la revendication 1, **caractérisée en ce que** le premier réducteur planétaire (EG) est un réducteur planétaire à trois ou quatre étages qui est entraîné au niveau de son âme et qui est respectivement commuté dans l'un desdits modes de transmission au moyen d'un embrayage en fixant un pignon solaire associé, ce qui forme au total une transmission à douze ou quinze vitesses.

8. Transmission à plusieurs vitesses selon la revendication 2, **caractérisée en ce que** les bagues d'embrayage (21a/b, 31a/b, 41a/b, 51 a/b, 61a/b, 81a/b, 91a/b) présentent un profil radial qui assure la transmission de la force.

9. Ttransmission à plusieurs vitesses selon la revendication 8, **caractérisée en ce que** le profil radial des anneaux d'embrayage (21a/b, 31a/b, 41a/b, 51 a/b, 61a/b, 81a/b, 91 a/b), qui ne sont activés que dans un sens de rotation, sont profilés de manière asymétrique de telle sorte que les flancs sollicités en pression sont plus raides que ceux situés en arrière par rapport à ceux-ci.

10. Transmission à plusieurs vitesses selon la revendication 1, **caractérisées en ce que** leurs roues solaires, planétaires et creuses, qui ne sont activées que dans un sens de rotation, présentent un profilage asymétrique des dents de roue, de telle sorte que les flancs sollicités par la force de traction présentent un angle d'engrènement plus grand que les flancs situés en arrière par rapport à celle-ci.

11. Transmission à plusieurs vitesses selon la revendication 1, **caractérisée en ce que** le dispositif d'entraînement (4a) est équipé d'un pignon à courroie dentée ou à chaîne qui présente un nombre de dents qui correspond approximativement à celui d'une pale de sortie de manivelle corrélée.

12. Transmission à plusieurs vitesses selon la revendication 11, **caractérisée en ce que** le pignon de la courroie dentée comporte 34 dents et la pale de sortie de la manivelle comporte 42 dents.

13. Transmission à plusieurs vitesses selon la revendication 8, **caractérisée en ce que** le pignon solaire (204) est fixé à l'axe dans les deux sens de rotation par un seul embrayage.

14. Transmission à plusieurs vitesses selon la revendication 8, **caractérisée en ce que** les pièces d'accouplement (71a, 71b) à accoupler dans les deux sens de rotation présentent un profil symétrique et peuvent ainsi fixer l'axe du planétaire (204) dans les deux sens de rotation.

15. Transmission à plusieurs vitesses selon les revendications 2 et 6, **caractérisée en ce que** les structures des rainures hélicoïdales dans le tambour de changement de vitesse ainsi que des fentes dans l'axe creux, qui servent au changement de toutes les vitesses, sont disposées au maximum à 180 degrés de leurs circonférences et des copies de celles-ci sont disposées sur leurs autres moitiés de circonférence, dans chacune desquelles s'engage une autre goupille cylindrique, qui actionne respectivement la bague d'embrayage correspondante d'autre part en parallèle.
